# EUROPEAN PATENT APPLICATION

(11) **EP 3 604 249 A1**
(43) Date of publication of application: **05.02.2020**
(21) Application number: 18776154.9
(22) Date of filing: 30.03.2018
(51) Int. Cl.: C03C 27/12, B32B 17/04, B32B 27/30, B60J 1/00

(54) **THERMOPLASTIC RESIN FILM AND GLASS PLATE-CONTAINING LAMINATE**

(30) Priority: 31.03.2017 JP 2017072879
(71) Applicant: Sekisui Chemical Co., Ltd., Osaka-shi, Osaka 530-8565 (JP)
(72) Inventor: YOSHIDA, Shougo, Kouka-shi Shiga 528-8585 (JP); MATSUMOTO, Manabu, Kouka-shi Shiga 528-8585 (JP); NOHARA, Atsushi, Kouka-shi Shiga 528-8585 (JP); KANI, Kohei, Kouka-shi Shiga 528-8585 (JP); OKANO, Moyuru, Kouka-shi Shiga 528-8585 (JP)
(74) Representative: Ter Meer Steinmeister & Partner
(86) International application number: PCT/JP2018/014003
(87) International publication number: WO 2018/182029

(57) **Abstract**

Provided is a thermoplastic resin film capable of controlling the discoloration due to color staining, and capable of controlling occurrence of color irregularity after irradiation with light irrespectively of inclusion of dyes. A thermoplastic resin film according to the present invention includes a thermoplastic resin and a dye, and the thermoplastic resin film has a color difference ΔE of 4.3 or less, determined by measuring change in color tone before and after application of load on a polyvinyl butyral resin film for color staining test in accordance with JIS K8781-4:2013 after applying a load of 200 g/cm² at 23°C and a humidity of 25% for 1 week on a laminate made up of the thermoplastic resin film, the polyvinyl butyral resin film for color staining test, and a green glass in accordance with JIS R3208 having a thickness of 2 mm laminated in this order on a rubber sheet having a hardness of 60.

## Description

### TECHNICAL FIELD

The present invention relates to a thermoplastic resin film that is favorably used while it is bonded to other members such as a glass plate. Also, the present invention relates to a glass plate-including laminate prepared with the thermoplastic resin film.

### BACKGROUND ART

A glass plate-including laminate in which a resin film is bonded to a glass plate is known. Among glass plate-including laminates, laminated glass is broadly used.

Since laminated glass generates only a small amount of scattering glass fragments even when subjected to external impact and broken, laminated glass is excellent in safety. As such, the laminated glass is widely used for automobiles, railway vehicles, aircraft, ships, buildings and the like. The laminated glass is produced by sandwiching a thermoplastic resin film between a pair of glass plates. Besides the laminated glass, the thermoplastic resin film is sometimes used while it is bonded to a member other than a glass plate.

The thermoplastic resin film used for the laminated glass is disclosed, for example, in the following Patent Document 1.

The following Patent Document 1 discloses an interlayer film having low yellowing tendency, high transmittance to UV-A rays and visible light, and low transmittance to UV-B rays. The interlayer film contains a polyvinyl acetal, a plasticizer, and an oxanilide type compound which is a UV absorber. Patent Document 1 indicates that the interlayer film may contain a nonaromatic light stabilizer of HAS/HALS/NOR-HALS type, and that the interlayer film may contain a dye.

### Related Art Document

### Patent Document

Patent Document 1: US2012/0052310A1

### SUMMARY OF THE INVENTION

### PROBLEMS TO BE SOLVED BY THE INVENTION

In the conventional thermoplastic resin film as described in Patent Document 1, discoloration can occur due to color staining. For example, color staining can occur in a part of the thermoplastic resin film. When the thermoplastic resin film is laminated on other resin film or glass plate, or the like, color staining can occur on the other resin film or glass plate. Occurrence of color staining causes discoloration in the laminate including the thermoplastic resin film.

In conventional thermoplastic resin films as those described in Patent Document 1, the light resistance is low, and the color tone can become different between an edge part and inside the edge part to result in color irregularity after irradiation with light.

It is an object of the present invention to provide a thermoplastic resin film capable of controlling the discoloration due to color staining, and capable of controlling occurrence of color irregularity after irradiation with light irrespectively of inclusion of dyes. It is also an object of the present invention to provide a glass plate-including laminate prepared with the thermoplastic resin film.

### MEANS FOR SOLVING THE PROBLEMS

According to a broad aspect of the present invention, there is provided a thermoplastic resin film (in the present specification, sometimes abbreviated as "resin film") including a thermoplastic resin and a dye, the thermoplastic resin film having a color difference ΔE of 4.3 or less, determined by measuring change in color tone before and after application of load on a polyvinyl butyral resin film for color staining test in accordance with JIS K8781-4:2013 after applying a load of 200 g/cm² at 23°C and a humidity of 25% for 1 week on a laminate made up of the thermoplastic resin film, the polyvinyl butyral resin film for color staining test, and a green glass in accordance with JIS R3208 having a thickness of 2 mm laminated in this order on a rubber sheet having a hardness of 60.

In a specific aspect of the resin film according to the present invention, the dye includes a dye having a molar volume of 200 cm³/mol or more.

In a specific aspect of the resin film according to the present invention, the resin film contains a pigment.

In a specific aspect of the resin film according to the present invention, the thermoplastic resin is a polyvinyl acetal resin.

In a specific aspect of the resin film according to the present invention, the resin film contains an anthraquinone-based dye, an azo-based dye, or an aminoketone-based dye as the dye.

It is preferred that the resin film contain a light stabilizer. It is preferred that the light stabilizer be a hindered amine light stabilizer. It is preferred that the hindered amine light stabilizer be a hindered amine light stabilizer in which an alkyl group or an alkoxy group is bonded to a nitrogen atom of a piperidine structure.

In a specific aspect of the resin film according to the present invention, the dye is an ingredient having the largest to the fourth largest content based on weight, among all the coloring agents contained in the thermoplastic resin film.

In a specific aspect of the resin film according to the present invention, when a glass plate-including laminate is obtained by sandwiching a thermoplastic resin film between two sheets of green glass having a thickness of 2 mm in accordance with JIS R3208, the obtained glass plate-including laminate has a haze value of 3% or less.

In a specific aspect of the resin film according to the present invention, when a glass plate-including laminate is obtained by sandwiching a thermoplastic resin film between two sheets of green glass having a thickness of 2 mm in accordance with JIS R3208, the obtained glass plate-including laminate has a total light transmittance of 50% or less.

In a specific aspect of the resin film according to the present invention, the glass transition temperature is 25°C or more and 40°C or less.

In a specific aspect of the resin film according to the present invention, an average molar volume of all the dyes contained in the thermoplastic resin film is 280 cm³/mol or more.

In a specific aspect of the resin film according to the present invention, the thermoplastic resin film contains three or more kinds of dyes, and contains one or more kinds of pigments.

It is preferred that the resin film according to the present invention be a thermoplastic resin film to be used while it is bonded to a glass plate.

According to a broad aspect of the present invention, there is provided a glass plate-including laminate including a first glass plate; and the above-described thermoplastic resin film, the thermoplastic resin film being bonded to the first glass plate.

In a specific aspect of the glass plate-including laminate according to the present invention, the glass plate-including laminate includes the first glass plate as a first lamination glass member; the thermoplastic resin film; and a second lamination glass member, and the thermoplastic resin film is bonded to the first glass plate, the thermoplastic resin film is bonded to the second lamination glass member, and the thermoplastic resin film is arranged between the first glass plate and the second lamination glass member.

### EFFECT OF THE INVENTION

A thermoplastic resin film according to the present invention includes a thermoplastic resin, and a dye. Using the thermoplastic resin film according to the present invention, the following color tone change is measured. On a rubber sheet having a hardness of 60, the thermoplastic resin film, the polyvinyl butyral resin film for color staining test, and a green glass in accordance with JIS R3208 having a thickness of 2 mm are laminated in this order to obtain a laminate. On this laminate, a load of 200 g/cm² is applied at 23°C and a humidity of 25% for 1 week. In accordance with JIS K8781-4:2013, change in color tone before and after application of load on the polyvinyl butyral resin film for color staining test is measured. In the measurement of the polyvinyl butyral resin film for color staining test laminated on the resin film according to the present invention, a color difference ΔE before and after the color staining test of the polyvinyl butyral resin film for color staining test is 4.3 or less. Since the thermoplastic resin film according to the present invention is provided with the above-described configuration, it is possible to control the discoloration due to color staining, and to control occurrence of color irregularity after irradiation with light irrespectively of inclusion of dyes.

### BRIEF DESCRIPTION OF DRAWINGS

[Fig. 1] Fig. 1 is a sectional view showing a glass plate-including laminate prepared with a thermoplastic resin film according to one embodiment of the present invention.
[Fig. 2] Fig. 2 is a sectional view showing a modified example of a glass plate-including laminate prepared with the thermoplastic resin film according to one embodiment of the present invention.
[Fig. 3] Fig. 3 is a view showing laminated glass in which color irregularity occurred in the evaluation of color irregularity after irradiation with light.

### MODE(S) FOR CARRYING OUT THE INVENTION

Hereinafter, the details of the present invention will be described.

The thermoplastic resin film according to the present invention (in the specification, also abbreviated as "resin film") is favorably used while it is bonded to other members such as a glass plate. The other member is an objective member to be bonded. The thermoplastic resin film according to the present invention may be directly bonded to, for example, a glass plate, or may be indirectly bonded to a glass plate with other resin film or the like interposed therebetween.

Using the resin film according to the present invention, the following color tone change is measured. 1) On a rubber sheet having a hardness of 60, the thermoplastic resin film, the polyvinyl butyral resin film for color staining test, and a green glass in accordance with JIS R3208 having a thickness of 2 mm are laminated in this order to obtain a laminate. 2) On this laminate, a load of 200 g/cm² is applied at 23°C and a humidity of 25% for 1 week (load applying step, color staining test). 3) In accordance with JIS K8781-4:2013, change in color tone before and after application of load on the polyvinyl butyral resin film for color staining test is measured. In the measurement of the polyvinyl butyral resin film for color staining test laminated on the resin film according to the present invention, a color difference ΔE before and after the color staining test of the polyvinyl butyral resin film for color staining test is 4.3 or less. A 10-point average roughness Rz of the surface measured in accordance with JIS B0601:1994 of the polyvinyl butyral resin film for color staining test is 20 µm. The polyvinyl butyral resin film for color staining test is made up of 100 parts by weight of a polyvinyl butyral resin (polymerization degree of polyvinyl alcohol of 1700, content of hydroxyl group of 30% by mole, acetylation degree of 1% by mole, butyralization degree of 69% by mole) and 40 parts by weight of triethylene glycol di-2-ethylhexanoate (3GO). The polyvinyl butyral resin film for color staining test has a thickness of 760 µm and is a polyvinyl butyral resin film not including a dye and a pigment. The color difference ΔE of the polyvinyl butyral resin film for color staining test can be achieved by using a dye having a molar volume of 200 cm³/mol or more as a dye.

The color difference ΔE is determined in the following manner. Using the polyvinyl butyral resin film for color staining test before standing and the polyvinyl butyral resin film for color staining test after standing, laminated glass is prepared for each film using two sheets of clear glass (2.5 mm thick, 4 cm long, 4 cm wide) having a visible light transmittance of 90% as measured in accordance with JIS R3106:1998. Change in color tone before and after standing is determined by color difference ΔE in accordance with JIS K 8781-4:2013 using a spectrophotometer ("U-4100" available from Hitachi High-Technologies Corporation). The measurement position is a center part of the laminated glass.

The resin film according to the present invention includes a thermoplastic resin, and a dye. In the resin film according to the present invention, since the color difference ΔE of the polyvinyl butyral resin film for color staining test can be easily made 4.3 or less, it is preferred that a dye having a molar volume of 200 cm³/mol or more be contained as the dye.

In the present invention, since the above-described configuration is provided, it is possible to control the discoloration due to color staining irrespectively of inclusion of dyes. In the present invention, it is possible to control occurrence of color staining in a part of the thermoplastic resin film, and further it is possible to control occurrence of color irregularity after irradiation with light. Further, when the thermoplastic resin film is laminated on other resin film or glass plate, or the like, it is possible to control occurrence of color staining on the other resin film or glass plate, and it is possible to control the discoloration by color staining.

In the present invention, when the glass plate-including laminate has high transparency, it is possible to keep high transparency and it is possible to prevent the visible light transmittance from deteriorating.

The resin film according to the present invention preferably contains a light stabilizer, and more preferably contains a hindered amine light stabilizer.

In the conventional thermoplastic resin film, the light resistance is low, and the color tone can differ between an edge part and inside the edge part to result in occurrence of color irregularity after irradiation with light. By containing the light stabilizer in the resin film, especially by containing a hindered amine light stabilizer in the resin film, it is possible to control occurrence of color irregularity after irradiation with light. More specifically, by containing the light stabilizer in the resin film, especially by containing the hindered amine light stabilizer in the resin film, the color tone is less likely to differ between an edge part and inside the edge part, and color irregularity is less likely to occur. In the present specification, the term "color irregularity" means that the color tone differs between an edge part and inside the edge part.

The resin film according to the present invention is favorably used while it is bonded to a glass plate, and is favorably used so as to obtain a glass plate-including laminate. By containing the light stabilizer in the resin film, especially by containing a hindered amine light stabilizer in the resin film, it is possible to improve the light resistance of the glass plate-including laminate, and it is possible to control occurrence of color irregularity.

A thermoplastic resin film is sandwiched between two sheets of green glass having a thickness of 2 mm in accordance with JIS R3208 to obtain a glass plate-including laminate. The obtained glass plate-including laminate has a total light transmittance of preferably 1% or more, more preferably 4% or more, further preferably 6% or more, and of preferably 50% or less, more preferably 30% or less, further preferably 20% or less, and especially preferably 8% or less. It is preferred that the thermoplastic resin film have a region satisfying the lower limit or the upper limit of the total light transmittance.

The total light transmittance is a sum of the parallel light transmittance and the diffused light transmittance. The total light transmittance is measured in accordance with JIS R3106:1998. Specifically, a spectral transmittance is measured by a spectrophotometer while an object to be measured is brought into close and parallel contact with an opening of an integrating sphere so that all the transmitted rays are received by the integrating sphere. The total light transmittance means a visible light transmittance calculated from the spectral transmittance measured in this condition. Examples of the spectrophotometer include "U-4100" available from Hitachi High-Technologies Corporation.

From the viewpoint of increasing the transparency of a glass plate-including laminate, when a glass plate-including laminate is obtained by sandwiching a thermoplastic resin film between two sheets of green glass having a thickness of 2 mm in accordance with JIS R3208, the obtained glass plate-including laminate has a haze value of preferably 5% or less, more preferably 3% or less, and further preferably 1.2% or less.

Hereinafter, materials that can be used in the resin film according to the present invention are specifically described.

### (Thermoplastic resin)

The resin film contains a thermoplastic resin. Examples of the thermoplastic resin include a polyvinyl acetal resin, an ethylene-vinyl acetate copolymer resin, an ethylene-acrylic acid copolymer resin, a polyurethane resin, a polyvinyl alcohol resin, an ionomer resin, and a cycloolefin resin.

In the resin film according to the present invention, it is preferred that the thermoplastic resin contained in the resin film be a polyvinyl acetal resin. It is preferred that the surface layer and the intermediate layer contain a polyvinyl acetal resin. One kind of the polyvinyl acetal resin may be used alone and two or more kinds thereof may be used in combination.

For example, the polyvinyl acetal resin can be produced by acetalizing polyvinyl alcohol with an aldehyde. It is preferred that the polyvinyl acetal resin be an acetalized product of polyvinyl alcohol. For example, the polyvinyl alcohol can be produced by saponifying polyvinyl acetate. The saponification degree of the polyvinyl alcohol generally lies within the range of 70 to 99.9% by mole.

An average polymerization degree of the polyvinyl alcohol is preferably 200 or more, more preferably 500 or more, and is preferably 3500 or less, more preferably 3000 or less, and further preferably 2500 or less. When the average polymerization degree is the above lower limit or more, the penetration resistance of the glass plate-including laminate is further enhanced. When the average polymerization degree is the above upper limit or less, formation of a resin film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. It is preferred that the number of carbon atoms of the acetal group in the polyvinyl acetal resin be 3 or 4. When the number of carbon atoms of the acetal group in the polyvinyl acetal resin is 3 or more, the glass transition temperature of the resin film is sufficiently lowered.

The aldehyde is not particularly limited. In general, an aldehyde with 1 to 10 carbon atoms is preferably used. Examples of the aldehyde with 1 to 10 carbon atoms include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, benzaldehyde, and the like. Propionaldehyde, n-butyraldehyde, isobutyraldehyde, n-hexylaldehyde, or n-valeraldehyde is preferred, propionaldehyde, n-butyraldehyde, or isobutyraldehyde is more preferred, and n-butyraldehyde is further preferred. One kind of the aldehyde may be used alone, and two or more kinds thereof may be used in combination.

The content of the hydroxyl group (the amount of hydroxyl groups) of the polyvinyl acetal resin is preferably 15% by mole or more, and more preferably 18% by mole or more and is preferably 40% by mole or less, and more preferably 35% by mole or less. When the content of the hydroxyl group is the above lower limit or more, the adhesive force of the resin film is further enhanced. Moreover, when the content of the hydroxyl group is the above upper limit or less, the flexibility of the resin film is enhanced and the handling of the resin film is facilitated.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be determined in accordance with JIS K6728 "Testing methods for polyvinyl butyral".

The acetylation degree (the amount of acetyl groups) of the polyvinyl acetal resin is preferably 0.1% by mole or more, more preferably 0.3% by mole or more, and further preferably 0.5% by mole or more and preferably 30% by mole or less, more preferably 25% by mole or less, and further preferably 20% by mole or less. When the acetylation degree is the above lower limit or more, the compatibility between the polyvinyl acetal resin and a plasticizer is enhanced. When the acetylation degree is the above upper limit or less, with regard to the resin film and the glass plate-including laminate, the moisture resistance thereof is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of the polyvinyl acetal resin (the butyralization degree in the case of a polyvinyl butyral resin) is preferably 60% by mole or more, and more preferably 63% by mole or more and is preferably 85% by mole or less, more preferably 75% by mole or less, and further preferably 70% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is determined in the following manner. First, from the total amount of ethylene groups in the main chain, the amount of ethylene groups to which the hydroxyl group is bonded, and the amount of ethylene groups to which the acetyl group is bonded are subtracted. The obtained value is divided by the total amount of ethylene groups in the main chain to determine a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results determined by a method in accordance with JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree be calculated from the results determined by a method in accordance with JIS K6728 "Testing methods for polyvinyl butyral".

### (Plasticizer)

From the viewpoint of appropriately enhancing the adhesive force of a resin film, it is preferred that the resin film contain a plasticizer. By using a polyvinyl acetal resin and a plasticizer together, the adhesive force of the resin film according to the present invention for a glass plate, a lamination glass member, other resin films or the like is further enhanced. One kind of the plasticizer may be used alone, and two or more kinds thereof may be used in combination.

The plasticizer is not particularly limited. Examples of the plasticizer include organic ester plasticizers such as a monobasic organic acid ester and a polybasic organic acid ester, organic phosphate plasticizers such as an organic phosphate plasticizer and an organic phosphite plasticizer, and the like. Organic ester plasticizers are preferred. It is preferred that the plasticizer be a liquid plasticizer.

Examples of the monobasic organic acid ester include, but are not particularly limited to, a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decanoic acid, and the like.

Examples of the polybasic organic acid ester include, but are not particularly limited to, an ester compound of a polybasic organic acid and an alcohol having a linear or branched structure of 4 to 8 carbon atoms. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. Organic ester plasticizers other than these may be used. Other adipic acid esters other than the above-described adipic acid esters may be used.

Examples of the organic phosphate plasticizer include, but are not particularly limited to, tributoxyethyl phosphate, isodecyl phenyl phosphate, triisopropyl phosphate, and the like.

It is preferred that the plasticizer be a diester plasticizer represented by the following formula (1).

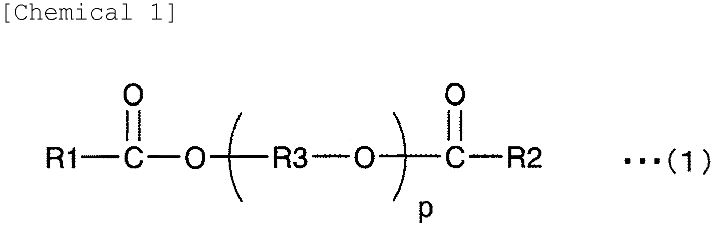

In the foregoing formula (1), R1 and R2 each represent an organic group with 5 to 10 carbon atoms, R3 represents an ethylene group, an isopropylene group, or an n-propylene group, and p represents an integer of 3 to 10. It is preferred that R1 and R2 in the foregoing formula (1) each be an organic group with 6 to 10 carbon atoms.

It is preferred that the plasticizer include triethylene glycol di-2-ethylhexanoate (3GO) or triethylene glycol di-2-ethylbutyrate, and it is more preferred that the plasticizer include triethylene glycol di-2-ethylhexanoate.

The content of the plasticizer is not particularly limited. In the resin film, the content of the plasticizer relative to 100 parts by weight of the thermoplastic resin is preferably 25 parts by weight or more, and more preferably 30 parts by weight or more and is preferably 60 parts by weight or less, more preferably 50 parts by weight or less, further preferably 45 parts by weight or less, and especially preferably 40 parts by weight or less. When the content of the plasticizer is the above lower limit or more, the penetration resistance of the glass plate-including laminate is further enhanced. When the content of the plasticizer is the above upper limit or less, the transparency of the resin film is further enhanced.

### (Coloring agent (dye and pigment))

From the viewpoint of controlling the discoloration, it is preferred that the resin film contain a dye, and the dye have a molar volume of 200 cm³/mol or more. It is preferred that the dye contained in the resin film include a dye having a molar volume of 200 cm³/mol or more.

From the viewpoint of further controlling the discoloration, and further controlling color irregularity, the molar volume of the dye is preferably 220 cm³/mol or more, more preferably 260 cm³/mol or more, and further preferably 300 cm³/mol or more. It is preferred that the resin film contain a dye having a molar volume of the above lower limit or more. The upper limit of the molar volume of the dye is not particularly limited. The molar volume of the dye may be 595 cm³/mol or less.

It is preferred that at least one kind of the dyes contained in the resin film have a molar volume of the above lower limit or more. It is preferred that all of the dyes contained in the resin film have a molar volume of the above lower limit or more.

From the viewpoint of further controlling discoloration, and further controlling color irregularity, the resin film has an average molar volume of all the dyes contained in the resin film of preferably 280 cm³/mol or more, more preferably 300 cm³/mol or more, further preferably 350 cm³/mol or more, and especially preferably 400 cm³/mol or more. The average molar volume of all the dyes may be 595 cm³/mol or less.

The average molar volume of all the dyes is the following sum. Sum of (molar volume of the first kind of the dyes × content of the first kind of the dyes in 100% by weight of all the dyes (% by weight))/100 + (molar volume of the second kind of the dyes × content of the second kind of the dyes in 100% by weight of all the dyes (% by weight))/100 + ...(molar volume of the n-th kind of the dyes × content of the n-th kind of the dyes in 100% by weight of all the dyes (% by weight))/100. For example, when the content of the dye having a molar volume in 100% by weight of all the dyes of 300 cm³/mol is 25% by weight, and the content of the dye having a molar volume in 100% by weight of all the dyes of 400 cm³/mol is 75% by weight, an average molar volume is 375 cm³/mol. When the dye contained in the resin film is one kind, the average molar volume of all the dyes is a molar volume of the one kind of dye.

Which of dyes and pigments the coloring agent is categorized in can be discriminated according to the classification by the color index.

The resin film may contain a pigment. The dye is different from a pigment. In the present specification, for coloring agents and the like that are not described in the color index, "dye" and "pigment" may be defined as follows. A polyvinyl butyral resin (the polymerization degree of polyvinyl alcohol of 1700, the content of the hydroxyl group of 30% by mole, the acetylation degree of 1% by mole, the butyralization degree of 69% by mole) is prepared. One hundred parts by weight of the polyvinyl butyral resin, 40 parts by weight of triethylene glycol di-2-ethylhexanoate (3GO), and a coloring agent in an amount of 0.015% by weight, relative to 100% by weight of the total amount of the polyvinyl butyral resin and 3GO are kneaded and extruded to give a resin film (single layer) having a thickness of 760 µm. Laminated glass is prepared with the resin film, and two sheets of clear glass (2.5 mm thick) having a visible light transmittance of 90% as measured in accordance with JIS R3106:1998, and when the obtained laminated glass has a haze value of less than 0.35%, the coloring agent is determined as a dye. The coloring agent having a haze value of 0.35% or more is determined as a pigment.

It is preferred that the thermoplastic resin film according to the present invention contain a pigment because the discoloration due to color staining can be further controlled, and occurrence of color irregularity after irradiation with light can be further controlled. By containing the pigment in the thermoplastic resin film according to the present invention, it is possible to further control occurrence of discoloration and color irregularity in comparison with the resin film containing only a dye and having comparable color. Since occurrence of discoloration and color irregularity can be further controlled, it is preferred that the thermoplastic resin film according to the present invention contain two or more kinds of dyes and contain one or more kinds of pigments, and it is further preferred that the thermoplastic resin film according to the present invention contain three or more kinds of dyes and contain one or more kinds of pigments.

Examples of the dyes include a pyrene-based dye, an aminoketone-based dye, an anthraquinone-based dye, and an azo-based dye.

Examples of the pyrene-based dye include Solvent Green 5 (CAS79869-59-3) and Solvent Green 7 (CAS6358-69-6).

Examples of the aminoketone-based dye include Solvent Yellow 98 (CAS12671-74-8), Solvent Yellow 85 (CAS12271-01-1) and Solvent Red 179 (CAS8910-94-5), and Solvent Red 135 (CAS71902-17-5).

Examples of the anthraquinone-based dye include Solvent Yellow 163 (CAS13676091-0), Solvent Red 207 (CAS15958-69-6), Disperse Red 92 (CAS12236-11-2), Solvent Violet 13 (CAS81-48-1), Disperse Violet 31 (CAS6408-72-6), Solvent Blue 97 (CAS61969-44-6), Solvent Blue 45 (CAS37229-23-5), Solvent Blue 104 (CAS116-75-6) and Disperse Blue 214 (CAS104491-84-1).

Examples of the azo dye include Solvent Yellow30 (CAS3321-10-4), Solvent Red 164 (CAS70956-30-8), and Disperse Blue 146 (CAS88650-91-3).

From the viewpoint of further controlling the discoloration, and from the viewpoint of further controlling color irregularity, it is preferred that the resin film contain an anthraquinone-based dye, an azo-based dye, or an aminoketone-based dye as the dye. The resin film may contain an anthraquinone-based dye, may contain an azo-based dye, or may contain an aminoketone-based dye.

The anthraquinone-based dye has an anthraquinone skeleton. The azo-based dye has an azo group.

Even when the total content of the coloring agents such as dyes and pigments is large due to use of a dye having a specific molar volume, the discoloration can be controlled. Therefore, the dye may be an ingredient having the largest to the fourth largest content based on weight, among all the coloring agents contained in the thermoplastic resin film. In other words, the dye may be an ingredient having the largest content, the second largest content, the third largest content, or the fourth largest content based on weight, among all the coloring agents contained in the thermoplastic resin film. From the viewpoint of further controlling the discoloration, and from the viewpoint of further controlling color irregularity, it is preferred that the dye be an ingredient having the largest to the third or fourth largest content based on weight, among all the coloring agents contained in the thermoplastic resin film.

The dye can also be classified according to the color. From the viewpoint of deepening the color, it is preferred that the dye be a red dye or a violet dye. Examples of the red dye include Solvent Red 179, Solvent Red 164, and Solvent Red 135. Examples of the violet dye include Disperse Violet 31, and Solvent Violet 13. As the dye, a blue dye, a brown dye, a black dye, a green dye, and the like may also be used besides the above.

From the viewpoint of further controlling the discoloration, and effectively controlling color irregularity after irradiation with light, the content of the dye in 100% by weight of the resin film is preferably 0.001% by weight or more, more preferably 0.01% by weight or more, and further preferably 0.03% by weight or more and is preferably 0.2% by weight or less, more preferably 0.1% by weight or less, and further preferably 0.08% by weight or less.

### (Light stabilizer)

It is preferred that the resin film include a light stabilizer. By using the light stabilizer, discoloration is further suppressed and the visible light transmittance is less likely to lower even when the resin film is used over a long term or exposed to sunlight. From the viewpoint of controlling color irregularity and discoloration after irradiation with light, it is preferred that the resin film contain the light stabilizer together with the dye. One kind of the light stabilizer may be used alone and two or more kinds thereof may be used in combination.

From the viewpoint of further suppressing the discoloration, it is preferred that the light stabilizer be a hindered amine light stabilizer.

Examples of the hindered amine light stabilizer include hindered amine light stabilizers in which an alkyl group, an alkoxy group or a hydrogen atom is bonded to a nitrogen atom of the piperidine structure. From the viewpoint of further suppressing the discoloration, a hindered amine light stabilizer in which an alkyl group or an alkoxy group is bonded to a nitrogen atom of the piperidine structure is preferred. The hindered amine light stabilizer is preferably a hindered amine light stabilizer in which an alkyl group is bonded to a nitrogen atom of the piperidine structure, and also preferably a hindered amine light stabilizer in which an alkoxy group is bonded to a nitrogen atom of the piperidine structure.

As the hindered amine light stabilizer in which an alkyl group is bonded to a nitrogen atom of the piperidine structure, "Tinuvin765" and "Tinuvin622SF" available from BASF, and "ADK STAB LA-52" available from ADEKA, or the like can be recited.

As the hindered amine light stabilizer in which an alkoxy group is bonded to a nitrogen atom of the piperidine structure, "TinuvinXT-850FF" and "TinuvinXT-855FF" available from BASF, and "ADK STAB LA-81" available from ADEKA, or the like can be recited.

As the hindered amine light stabilizer in which a hydrogen atom is bonded to a nitrogen atom of the piperidine structure, "Tinuvin770DF" available from BASF, and "Hostavin N24" available from Clariant, or the like can be recited.

From the viewpoint of further suppressing the discoloration, the light stabilizer has a molecular weight of preferably 2000 or less, more preferably 1000 or less, further preferably 700 or less.

From the viewpoint of further controlling excessive color irregularity and discoloration, the content of the light stabilizer in 100% by weight of the resin film is preferably 0.0025% by weight or more, and more preferably 0.025% by weight or more and is preferably 0.5% by weight or less, and more preferably 0.3% by weight or less.

### (Metal salt)

It is preferred that the resin film contain a magnesium salt, an alkali metal salt, or an alkaline earth metal salt (hereinafter, these are sometimes described collectively as Metal salt M). By using the metal salt M, control of the adhesive force of the resin film according to the present invention for a glass plate, a lamination glass member or other resin film is further facilitated. One kind of the Metal salt M may be used alone, and two or more kinds thereof may be used in combination.

It is preferred that the Metal salt M contain as metal Li, Na, K, Rb, Cs, Mg, Ca, Sr or Ba. It is preferred that the metal salt included in the resin film be K or Mg. In this case, both K and Mg may be contained.

Moreover, it is more preferred that the Metal salt M be an alkali metal salt of an organic acid with 2 to 16 carbon atoms or an alkaline earth metal salt of an organic acid with 2 to 16 carbon atoms, and it is further preferred that the Metal salt M be a magnesium carboxylate with 2 to 16 carbon atoms or a potassium carboxylate with 2 to 16 carbon atoms.

Examples of the magnesium carboxylate with 2 to 16 carbon atoms and the potassium carboxylate with 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the contents of Mg and K in the resin film is preferably 5 ppm or more, more preferably 10 ppm or more, and further preferably 20 ppm or more and preferably 300 ppm or less, more preferably 250 ppm or less, and further preferably 200 ppm or less. When the total of the contents of Mg and K is the above lower limit or more and the above upper limit or less, it is possible to control the adhesive force of the resin film for a glass plate, a lamination glass member or other resin film or the like more favorably.

### (Ultraviolet ray screening agent)

It is preferred that the resin film include an ultraviolet ray screening agent. By using the ultraviolet ray screening agent, discoloration is further suppressed and the visible light transmittance is less likely to lower even when the resin film is used over a long term or used under high temperature. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include a metal-based ultraviolet ray screening agent (an ultraviolet ray screening agent containing a metal), a metal oxide-based ultraviolet ray screening agent (an ultraviolet ray screening agent containing a metal oxide), a benzotriazole-based ultraviolet ray screening agent (an ultraviolet ray screening agent having a benzotriazole structure), a benzophenone-based ultraviolet ray screening agent (an ultraviolet ray screening agent having a benzophenone structure), a triazine-based ultraviolet ray screening agent (an ultraviolet ray screening agent having a triazine structure), a malonic acid ester-based ultraviolet ray screening agent (an ultraviolet ray screening agent having a malonic acid ester structure), an oxanilide-based ultraviolet ray screening agent (an ultraviolet ray screening agent having an oxanilide structure), a benzoate-based ultraviolet ray screening agent (an ultraviolet ray screening agent having a benzoate structure), and the like.

Examples of the metal-based ultraviolet ray screening agent include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably a benzotriazole-based ultraviolet ray screening agent, a benzophenone-based ultraviolet ray screening agent, a triazine-based ultraviolet ray screening agent, or a benzoate-based ultraviolet ray screening agent, more preferably a benzotriazole-based ultraviolet ray screening agent or a benzophenone-based ultraviolet ray screening agent, and further preferably a benzotriazole-based ultraviolet ray screening agent.

Examples of the metal oxide-based ultraviolet ray screening agent include zinc oxide, titanium oxide, cerium oxide, and the like. Furthermore, with regard to the metal oxide-based ultraviolet ray screening agent, the surface thereof may be coated with any material. Examples of the coating material for the surface of the metal oxide-based ultraviolet ray screening agent include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the benzotriazole-based ultraviolet ray screening agent include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-di-amylphenyl)benzotriazole ("Tinuvin 328" available from BASF Japan Ltd.), and the like. It is preferred that the ultraviolet ray screening agent be a benzotriazole-based ultraviolet ray screening agent containing a halogen atom, and it is more preferred that the ultraviolet ray screening agent be a benzotriazole-based ultraviolet ray screening agent containing a chlorine atom, because those are excellent in ultraviolet ray absorbing performance.

Examples of the benzophenone-based ultraviolet ray screening agent include octabenzone ("Chimassorb 81" available from BASF Japan Ltd.), and the like.

Examples of the triazine-based ultraviolet ray screening agent include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the malonic acid ester-based ultraviolet ray screening agent include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the malonic acid ester-based ultraviolet ray screening agent include Hostavin B-CAP, Hostavin PR-25, and Hostavin PR-31 (any of these is available from Clariant Japan K.K.).

Examples of the oxanilide-based ultraviolet ray screening agent include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide, and 2-ethyl-2'-ethoxy-oxanilide ("Sanduvor VSU" available from Clariant Japan K.K.).

Examples of the benzoate-based ultraviolet ray screening agent include 2,4-di-tert-butylphenyl-3,5-di-tert-butyl-4-hydroxybenzoate ("Tinuvin 120" available from BASF Japan Ltd.), and the like.

From the viewpoint of further improving the weather resistance, and further controlling deterioration in visible light transmittance, the content of the ultraviolet ray screening agent in 100% by weight of the resin film is preferably 0.1% by weight or more, more preferably 0.2% by weight or more, further preferably 0.3% by weight or more, and especially preferably 0.5% by weight or more. From the viewpoint of further improving the weather resistance, and further controlling deterioration in visible light transmittance, the content of the ultraviolet ray screening agent in 100% by weight of the resin film is preferably 2.5% by weight or less, more preferably 2% by weight or less, further preferably 1% by weight or less, and especially preferably 0.8% by weight or less.

### (Oxidation inhibitor)

It is preferred that the resin film include an oxidation inhibitor. By using the oxidation inhibitor, discoloration is further suppressed and the visible light transmittance is less likely to lower even when the resin film is used over a long term or used under high temperature. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3, 5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, bis(3-t-butyl-4-hydroxy-5-methylbenzenepropanoic acid)ethylenebis(oxyethylene), and the like. One kind or two or more kinds among these oxidation inhibitors are preferably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-di-t-butylphenyl) phosphite, bis(2,4-di-t-butyl-6-methylphenyl)ethyl ester phosphorous acid, 2,2'-methylenebis(4,6-di-t-butyl-1-phenyloxy) (2-ethylhexyloxy) phosphorus, and the like. One kind or two or more kinds among these oxidation inhibitors are preferably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and "ADK STAB AO-40" available from ADEKA CORPORATION.

From the viewpoint of further improving the weather resistance and further controlling deterioration in visible light transmittance, the content of the oxidation inhibitor in 100% by weight of the resin film is preferably 0.1% by weight or more. Moreover, since an effect commensurate with the addition of an oxidation inhibitor is not attained, it is preferred that the content of the oxidation inhibitor be 2% by weight or less in 100% by weight of the resin film.

### (Other ingredients)

The resin film may contain additives such as a flame retardant, an antistatic agent, a moisture-resistance improving agent, a fluorescent brightening agent, and an infrared ray absorber, as necessary. One kind of these additives may be used alone, and two or more kinds thereof may be used in combination.

### (Other details of resin film)

From the viewpoint of effectively enhancing the penetration resistance of the glass plate-including laminates, the resin film has a glass transition temperature of preferably 10°C or more, more preferably 15°C or more, and further preferably 20°C or more and is preferably 45°C or less, more preferably 40°C or less, and further preferably 35°C or less.

The thickness of the resin film is not particularly limited. From the viewpoint of the practical aspect and the viewpoint of sufficiently enhancing the heat shielding property, the thickness of the resin film is preferably 0.1 mm or more, and more preferably 0.25 mm or more and is preferably 3 mm or less, and more preferably 1.5 mm or less. When the thickness of the resin film is the above lower limit or more, the penetration resistance of the glass plate-including laminate is further enhanced. When the thickness of the resin film is the above upper limit or less, the transparency of the resin film is further improved.

The method for producing the resin film is not particularly limited. As the method for producing the resin film, a conventionally known method can be used. For example, a production method including kneading the ingredients, and molding the resin film can be recited. A production method of extrusion-molding is preferred because the method is suitable for continuous production.

A method for the kneading is not particularly limited. Examples of such a method include methods using an extruder, a plastograph, a kneader, a Banbury mixer or a calender roll, or the like. A method of using an extruder is suitable, and a method of using a biaxial extruder is more suitable because such a method is suited for continuous production.

The resin film according to the present invention may be used solely for laminated glass, or may be used for laminated glass together with other resin film. The resin film according to the present invention can be used as a multilayer resin film while it is laminated on other resin film.

### (Glass plate-including laminate)

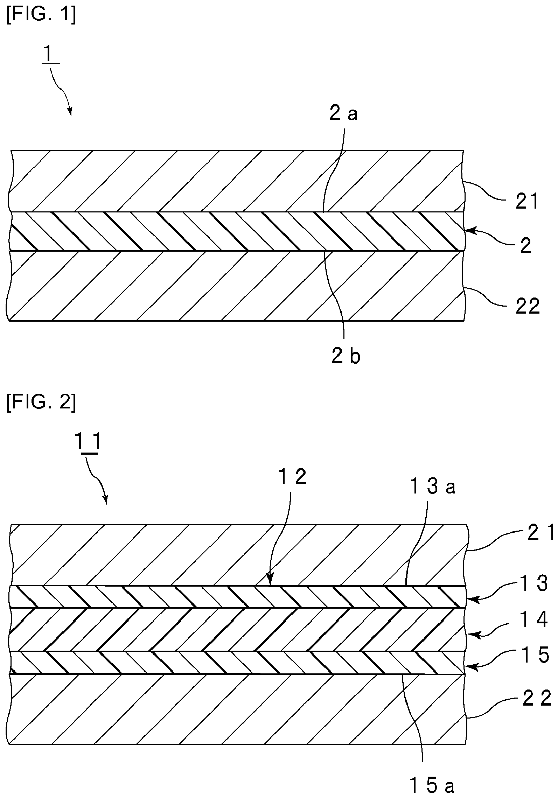

Fig. 1 is a sectional view showing one example of a glass plate-including laminate prepared with the thermoplastic resin film in accordance with one embodiment of the present invention.

A glass plate-including laminate 1 shown in Fig. 1 includes a resin film 2, a first lamination glass member 21 (first glass plate), and a second lamination glass member 22 (which may be a second glass plate) . The resin film 2 is a monolayer resin film. The resin film 2 is used for obtaining a glass plate-including laminate. The resin film 2 is a resin film to be used while it is bonded to a glass plate. The glass plate-including laminate 1 is laminated glass.

The resin film 2 is arranged and sandwiched between the first lamination glass member 21 and the second lamination glass member 22. The first lamination glass member 21 is layered on a first surface 2a (one surface) of the resin film 2. The second lamination glass member 22 is layered on a second surface 2b (other surface) opposite to the first surface 2a of the resin film 2.

Fig. 2 is a sectional view showing a modified example of a glass plate-including laminate prepared with the thermoplastic resin film in accordance with one embodiment of the present invention.

A glass plate-including laminate 11 shown in Fig. 2 includes a resin film 12, the first lamination glass member 21 (first glass plate), and the second lamination glass member 22. The resin film 12 is a multilayer resin film. The resin film 12 is used for obtaining a glass plate-including laminate. The resin film 12 is a resin film to be used while it is bonded to a glass plate. The glass plate-including laminate 11 is laminated glass.

The resin film 12 has such a structure that three resin films: a first layer 13 (resin film), a second layer 14 (resin film) and a third layer 15 (resin film) are laminated in this order. In the present embodiment, the second layer 14 is a sound insulating layer. The second layer 14 is bonded to the first and the second lamination glass members 21, 22 with the first and the third layers 13, 15 interposed therebetween. The first and the third layers 13, 15 are protective layers. As the first and the third layers 13, 15, the resin film according to one embodiment of the present invention is used. As the second layer 14, the resin film according to one embodiment of the present invention may be used. The first layer 13 or the third layer 15 may also be the resin film according to an embodiment of the present invention.

The resin film 12 is arranged and sandwiched between the first lamination glass member 21 and the second lamination glass member 22. The second layer 14 (resin film) is arranged between the first lamination glass member 21 and the second lamination glass member 22 with the first and the third layers 13, 15 interposed therebetween. The first lamination glass member 21 is layered on an outer surface 13a of the first layer 13. The second lamination glass member 22 is layered on an outer surface 15a of the second layer 15.

As described above, it suffices that the glass plate-including laminate according to the present invention includes a first glass plate, and a resin film according to the present invention. It is preferred that the resin film be arranged between the first lamination glass member (first glass plate) and the second lamination glass member. The glass plate-including laminate may include only the resin film according to the present invention, or may include the resin film according to the present invention and other resin film, as the resin film. The glass plate-including laminate includes at least the resin film according to the present invention.

When the thermoplastic resin film according to the present invention is used as at least one layer in a multilayer film having two or more layers, it is preferred that the multilayer film be a sound insulating film having a sound insulating layer so as to improve the sound insulating property of the laminated glass. The multilayer film is a film including the resin film according to the present invention. The multilayer film may include a sound insulating layer and a protective layer. As the multilayer film, a two-layer structure of a sound insulating layer and a protective layer, a three-layer structure of a protective layer, a sound insulating layer, and a protective layer, and a four or more-layer structure having at least one sound insulating layer and at least one protective layer can be recited. In Fig. 2, a multilayer film made up of the first layer 13, the second layer 14, and the third layer 15 is shown. In this case, the resin film according to the present invention can be used as the first layer 13, and the resin film according to the present invention can be used also as the third layer 15. For example, the multilayer film may be made up of only the first layer 13 and the second layer 14 in Fig. 2. In this case, the resin film according to the present invention can be used as the first layer 13, and the resin film according to the present invention can be used also as the second layer 14.

In the case of the multilayer film having a two-layer structure made up of a sound insulating layer and a protective layer, the sound insulating layer may be the resin film according to the present invention, the protective layer may be the resin film according to the present invention, and it is preferred that the protective layer be the resin film according to the present invention. In the case of the multilayer film having a three-layer structure made up of a protective layer, a sound insulating layer, and a protective layer, the protective layer includes the resin film according to the present invention, and the sound insulating layer may be the resin film according to the present invention. It is preferred that the protective layer be the resin film according to the present invention. In the case of the multilayer film having a four or more-layer structure made up of at least one sound insulating layer, and at least one protective layer, the sound insulating layer may be the resin film according to the present invention, and the protective layer may be the resin film according to the present invention. It is preferred that the protective layer be the resin film according to the present invention.

In the multilayer film, the sound insulating layer imparts the sound insulating property in the multilayer film. It is preferred that the sound insulating layer contain a polyvinyl acetal resin (X) and a plasticizer.

For example, the polyvinyl acetal resin (X) can be produced by acetalizing polyvinyl alcohol (PVA) with an aldehyde. It is preferred that the polyvinyl acetal resin (X) be an acetalized product of polyvinyl alcohol. For example, the polyvinyl alcohol can be obtained by saponifying polyvinyl acetate. The saponification degree of the polyvinyl alcohol generally lies within the range of 70 to 99.9% by mole.

An average polymerization degree of the polyvinyl alcohol (PVA) used for production of the polyvinyl acetal resin (X) is preferably 200 or more and preferably 5000 or less, and more preferably 4000 or less. When the average polymerization degree is the above lower limit or more, the penetration resistance is further enhanced. When the average polymerization degree is the above upper limit or less, formation of a sound insulating layer is facilitated.

In production of the polyvinyl acetal resin (X), the number of carbon atoms in aldehyde for acetalizing the polyvinyl alcohol is preferably 4 or more, and is preferably 6 or less. When the number of carbon atoms in aldehyde is the above lower limit or more, it is possible to make a sufficient amount of a plasticizer be contained stably, and it is possible to exhibit excellent sound insulating property. Also, it is possible to prevent a plasticizer from bleeding out. When the number of carbon atoms in aldehyde is the above upper limit or less, synthesis of the polyvinyl acetal resin (X) is facilitated, and the productivity can be ensured.

The aldehyde with 4 to 6 carbon atoms may be a straight-chain aldehyde, or may be a branched aldehyde. Examples of the aldehyde with 4 to 6 carbon atoms include n-butyl aldehyde, and n-valeraldehyde.

The content of the hydroxyl group of the polyvinyl acetal resin (X) is preferably 30% by mole or less, more preferably 28% by mole or less, further preferably 26% by mole or less, and especially preferably 24% by mole or less. When the content of the hydroxyl group of the polyvinyl acetal resin (X) is the above upper limit or less, it is possible to make a plasticizer be contained in an amount necessary for exhibition of the sound insulating property, and it is possible to prevent the plasticizer from bleeding out. The content of the hydroxyl group of the polyvinyl acetal resin (X) is preferably 10% by mole or more, more preferably 15% by mole or more, and further preferably 20% by mole or more.

The acetalization degree of the polyvinyl acetal resin (X) is preferably 60% by mole or more, more preferably 65% by mole or more, and further preferably 68% by mole or more and is preferably 85% by mole or less. When the acetalization degree of the polyvinyl acetal resin (X) is the above lower limit or more, it is possible to enhance the hydrophobicity of the sound insulating layer, and to make a plasticizer be contained in an amount necessary for exhibition of the sound insulating property, so that it is possible to prevent bleeding out of the plasticizer or whitening. When the acetalization degree of the polyvinyl acetal resin (X) is the above upper limit or less, synthesis of the polyvinyl acetal resin (X) is facilitated, and productivity can be ensured.

The acetylation degree of the polyvinyl acetal resin (X) is preferably 0.1% by mole or more, more preferably 1% by mole or more, further preferably 5% by mole or more, and especially preferably 8% by mole or more and is preferably 30% by mole or less, more preferably 25% by mole or less, and further preferably 20% by mole or less. When the acetylation degree of the polyvinyl acetal resin (X) is the above lower limit or more, it is possible to make a plasticizer be contained in an amount necessary for exhibition of the sound insulating property, and bleeding out can be prevented. When the acetylation degree of the polyvinyl acetal resin (X) is the above upper limit or less, it is possible to enhance the hydrophobicity of the sound insulating layer, and it is possible to prevent whitening.

In particular, since it is possible to easily make a plasticizer in an amount necessary for exhibition of the sound insulating property be contained in the sound insulating layer, it is preferred that the polyvinyl acetal resin (X) be a polyvinyl acetal resin having an acetylation degree of 8% by mole or more, or a polyvinyl acetal resin having an acetylation degree of less than 8% by mole and an acetalization degree of 65% by mole or more. It is more preferred that the polyvinyl acetal resin (X) be a polyvinyl acetal resin having an acetylation degree of 8% by mole or more, or a polyvinyl acetal resin having an acetylation degree of less than 8% by mole and an acetalization degree of 68% by mole or more.

The content of the plasticizer in the sound insulating layer, relative to 100 parts by weight of the polyvinyl acetal resin (X) in the sound insulating layer is preferably 45 parts by weight or more, more preferably 50 parts by weight or more, and further preferably 55 parts by weight or more and is preferably 80 parts by weight or less, more preferably 75 parts by weight or less, and further preferably 70 parts by weight or less. When the content of the plasticizer is the above lower limit or more, high sound insulating property can be exhibited, and when the content of the plasticizer is the above upper limit or less, the plasticizer is less likely to bleed out, and deterioration in transparency and adhesivity of the multilayer film can be prevented.

The thickness of the sound insulating layer is preferably 50 µm or more, and more preferably 80 µm or more and is preferably 300 µm or less. When the thickness of the sound insulating layer is the above lower limit or more, sufficient sound insulating property can be exhibited. The thickness of the sound insulating layer shows an average thickness. A cross section shape in the thickness direction of the sound insulating layer may be a rectangular shape, and the sound insulating layer may have a wedge-shaped portion.

The sound insulating layer has one end, and other end on the opposite side of the one end, and may have such a shape that the thickness of the other end is larger than the thickness of the one end. It is preferred that the sound insulating layer have a portion having a wedge-shaped cross section in the thickness direction. In this case, the minimum thickness of the sound insulating layer is preferably 50 µm or more, more preferably 80 µm or more, and further preferably 100 µm or more. When the minimum thickness of the sound insulating layer is the above lower limit or more, sufficient sound insulating property can be exhibited. The upper limit of the maximum thickness of the sound insulating layer is not particularly limited. Taking the thickness as the multilayer film into account, the maximum thickness of the sound insulating layer is preferably 300 µm or less, and more preferably 200 µm or less.

The protective layer prevents a large amount of the plasticizer contained in the sound insulating layer from bleeding out to deteriorate the adhesivity between the multilayer film, and the glass plate and the lamination glass member, and imparts the penetration resistance to the multilayer film. It is preferred that the protective layer contain a polyvinyl acetal resin (Y) and a plasticizer.

For example, the polyvinyl acetal resin (Y) can be produced by acetalizing polyvinyl alcohol (PVA) with an aldehyde. It is preferred that the polyvinyl acetal resin (Y) be an acetalized product of polyvinyl alcohol. For example, the polyvinyl alcohol can be obtained by saponifying polyvinyl acetate. The saponification degree of the polyvinyl alcohol generally lies within the range of 70 to 99.9% by mole.

An average polymerization degree of the polyvinyl alcohol (PVA) used for production of the polyvinyl acetal resin (Y) is preferably 200 or more and preferably 5000 or less, and more preferably 4000 or less. When the average polymerization degree is the above lower limit or more, the penetration resistance of the glass plate-including laminate is further enhanced. When the average polymerization degree is the above upper limit or less, formation of the protective layer is facilitated.

In production of the polyvinyl acetal resin (Y), the number of carbon atoms in aldehyde for acetalizing the polyvinyl alcohol is preferably 3 or more and is preferably 4 or less. When the number of carbon atoms in aldehyde is the above lower limit or more, the penetration resistance of the multilayer film is enhanced. When the number of carbon atoms in aldehyde is the above upper limit or less, productivity of the polyvinyl acetal resin (Y) is improved.

The aldehyde with 3 to 4 carbon atoms may be a straight-chain aldehyde, or may be a branched aldehyde. Examples of the aldehyde with 3 to 4 carbon atoms include n-butyraldehyde.

The content of the hydroxyl group of the polyvinyl acetal resin (Y) is preferably 33% by mole or less, and is preferably 28% by mole or more. When the content of the hydroxyl group of the polyvinyl acetal resin (Y) is the above upper limit or less, it is possible to prevent whitening of the multilayer film. When the content of the hydroxyl group of the polyvinyl acetal resin (Y) is the above lower limit or more, the penetration resistance of the multilayer film is enhanced.

The acetalization degree of the polyvinyl acetal resin (Y) is preferably 60% by mole or more, and more preferably 65% by mole or more and is preferably 80% by mole or less, and more preferably 69% by mole or less. When the acetalization degree of the polyvinyl acetal resin (Y) is the above lower limit or more, it is possible to make a plasticizer be contained in an amount necessary for sufficient exhibition of the penetration resistance. When the acetalization degree of the polyvinyl acetal resin (Y) is the above upper limit or less, it is possible to ensure the adhesive force between the protective layer, and the glass plate and the lamination glass member.

The acetylation degree of the polyvinyl acetal resin (Y) is preferably 0.1% by mole or more and more preferably 2% by mole or more, and preferably 7% by mole or less. When the acetylation degree of the polyvinyl acetal resin (Y) is the above upper limit or less, it is possible to enhance the hydrophobicity of the protective layer, and it is possible to prevent whitening.

The content of the plasticizer in the protective layer, relative to 100 parts by weight of the polyvinyl acetal resin (Y) in the protective layer is preferably 20 parts by weight or more, more preferably 30 parts by weight or more, and further preferably 35 parts by weight or more and is preferably 45 parts by weight or less, and more preferably 43 parts by weight or less. When the content of the plasticizer is the above lower limit or more, penetration resistance can be ensured, and when the content of the plasticizer is the above upper limit or less, it is possible to prevent the plasticizer from bleeding out, and to prevent deterioration in transparency and adhesivity of the multilayer film.

Since the sound insulating property of the glass plate-including laminate is further improved, the content of the hydroxyl group of the polyvinyl acetal resin (Y) is preferably larger, more preferably larger by 1% by mole or more, further preferably larger by 5% by mole or more, and especially preferably larger by 8% by mole or more than the content of the hydroxyl group of the polyvinyl acetal resin (X). By adjusting the contents of the hydroxyl group of the polyvinyl acetal resin (X) and the polyvinyl acetal resin (Y), it is possible to control the content of the plasticizer in the sound insulating layer and the protective layer, and the glass transition temperature of the sound insulating layer lowers. As a result, the sound insulating property of the glass plate-including laminate further improves.

A content of the plasticizer in the sound insulating layer, relative to 100 parts by weight of the polyvinyl acetal resin (X) in the sound insulating layer is referred to as content (X). A content of the plasticizer in the protective layer, relative to 100 parts by weight of the polyvinyl acetal resin (Y) in the protective layer is referred to as content (Y). Since the sound insulating property of the glass plate-including laminate is further improved, the content (X) is preferably larger than the content (Y), and the content (X) is larger than the content (Y) more preferably by 5 parts by weight or more, further preferably by 15 parts by weight or more, and especially preferably by 20 parts by weight or more. By adjusting the content (X) and the content (Y), the glass transition temperature of the sound insulating layer lowers. As a result, the sound insulating property of the glass plate-including laminate further improves.

The thickness of the protective layer can be adjusted within such a range that the protective layer plays its part, and is not particularly limited. When there are projections and depressions on the protective layer, it is preferred that the thickness of the protective layer be made as thick as possible so as to suppress the transfer of the projections and depressions to the interface with the directly contacting sound insulating layer. Specifically, the thickness of the protective layer is preferably 100 µm or more, more preferably 300 µm or more, further preferably 400 µm or more, and especially preferably 450 µm or more. While the thickness of the protective layer is not particularly limited, the thickness is actually about 500 µm or less so as to ensure the thickness of the sound insulating layer to such a degree that sufficient sound insulating property is achieved. The thickness of the protective layer shows an average thickness. A cross section shape in the thickness direction of the protective layer may be a rectangular shape, and the protective layer may have a wedge-shaped portion.

The protective layer has one end, and other end on the opposite side of the one end, and may have such a shape that the thickness of the other end is larger than the thickness of the one end. It is preferred that the protective layer have a portion having a wedge-shaped cross section in the thickness direction. The minimum thickness of the protective layer can be adjusted within such a range that the protective layer plays its part, and is not particularly limited. When there are projections and depressions on the protective layer, it is preferred that the minimum thickness of the protective layer be made as thick as possible so as to suppress the transfer of the projections and depressions to the interface with the directly contacting sound insulating layer. Specifically, the minimum thickness of the protective layer is preferably 100 µm or more, more preferably 300 µm or more, further preferably 400 µm or more, and especially preferably 450 µm or more. The upper limit of the maximum thickness of the protective layer is not particularly limited. In order to ensure the thickness of the protective layer to such a degree that sufficient sound insulating property is achieved, the maximum thickness of the protective layer is preferably 1000 µm or less, and more preferably 800 µm or less.

The thermoplastic resin film according to the present invention may have one end and the other end being at the opposite side of the one end. The one end and the other end are end parts of both sides facing each other in the resin film. In the thermoplastic resin film of the present invention, it is preferred that the thickness of the other end be larger than the thickness of the one end because when the thermoplastic resin film of the present invention is used as an interlayer film for laminated glass, the obtained laminated glass can be favorably used as a head-up display. The thermoplastic resin film of the present invention may have a wedge-shaped cross section. The film including the thermoplastic resin film of the present invention may have a wedge-shaped cross section. If the thermoplastic resin film has a wedge-shaped cross section, it is possible to display an image in a head-up display while preventing occurrence of double images by adjusting the wedge angle θ of the wedge shape in accordance with the attachment angle of laminated glass when the thermoplastic resin film is used as an interlayer film for laminated glass. From the viewpoint of further suppressing double images, the wedge angle θ is preferably 0.1 mrad or more, more preferably 0.2 mrad or more, and further preferably 0.3 mrad or more and is preferably 1 mrad or less, and more preferably 0.9 mrad or less. For example, when a thermoplastic resin film having a wedge-shaped cross section is produced by a method of extruding a resin composition with an extruder, the shape of the resin film or the multilayer film can have a minimum thickness in a region slightly inside from a thinner one end part, and a maximum thickness in a region slightly inside from a thicker one end part. In the present specification, such a shape is also included in the wedge shape. The region slightly inside from a thinner one end part is concretely a region at a distance ranging from 0X to 0.2X inward from the thinner one end when the distance between the one end and the other end is referred to as X. The region slightly inside from a thicker one end part is concretely a region at a distance ranging from 0X to 0.2X inward from the thicker one end when the distance between the one end and the other end is referred to as X.

When the thermoplastic resin film of the present invention has a wedge-shaped cross section, a multilayer film including a sound insulating layer and a protective layer can be prepared by using the thermoplastic resin film. By laminating the protective layer while making the thickness of the sound insulating layer lie within a certain range, it is possible to adjust the cross section of the whole multilayer film to be a wedge shape having a certain wedge angle.

Examples of the lamination glass member include a glass plate, a PET (polyethylene terephthalate) film, and the like. As the laminated glass, laminated glass in which a resin film is sandwiched between a glass plate and a PET film or the like, as well as laminated glass in which a resin film is sandwiched between two glass plates, is included. The laminated glass is a laminate provided with a glass plate, and it is preferred that at least one glass plate be used. It is preferred that the second lamination glass member be a glass plate or a PET film.

Examples of the glass plate include a sheet of inorganic glass and a sheet of organic glass. Examples of the inorganic glass include float plate glass, heat ray-absorbing plate glass, heat ray-reflecting plate glass, polished plate glass, figured glass, wired plate glass, and the like. The organic glass is synthetic resin glass substituted for inorganic glass. Examples of the organic glass include a polycarbonate plate, a poly(meth)acrylic resin plate, and the like. Examples of the poly(meth)acrylic resin plate include a polymethyl (meth)acrylate plate, and the like.

The thickness of the lamination glass member is preferably 1 mm or more and preferably 5 mm or less, and more preferably 3 mm or less. The thickness of the glass plate is preferably 1 mm or more and preferably 5 mm or less, and more preferably 3 mm or less. When the lamination glass member is a PET film, the thickness of the PET film is preferably 0.03 mm or more and is preferably 0.5 mm or less.

The method for producing the glass plate-including laminate is not particularly limited. By bonding the resin film with the first glass plate, it is possible to obtain a glass plate-including laminate. Furthermore, for example, the resin film is sandwiched between the first lamination glass member and the second lamination glass member, and then, passed through pressure rolls or subjected to decompression suction in a rubber bag, so that the air remaining between the first lamination glass member and the resin film, and between the second lamination glass member and the resin film is removed. Afterward, the members are preliminarily bonded together at about 70 to 110°C to obtain a laminate. Next, by putting the laminate into an autoclave or by pressing the laminate, the members are press-bonded together at about 120 to 150°C and under a pressure of 1 to 1.5 MPa. In this way, laminated glass which is a glass plate-including laminate can be obtained.

Each of the resin film and the glass plate-including laminate can be used for automobiles, railway vehicles, aircraft, ships, buildings and the like. Each of the resin film and the glass plate-including laminate can also be used for applications other than these applications. It is preferred that the resin film and the glass plate-including laminate be a resin film and a glass plate-including laminate for vehicles or for building respectively, and it is more preferred that the resin film and the glass plate-including laminate be a resin film and a glass plate-including laminate for vehicles respectively. Each of the resin film and the glass plate-including laminate can be used for a windshield, side glass, rear glass or roof glass of an automobile, and the like.

Hereinafter, the present invention will be described in more detail with reference to examples and comparative examples. The present invention is not limited only to these examples.

The following materials were used in examples and comparative examples.

### (Polyvinyl acetal resin)

### Polyvinyl butyral resin (PVB(1))(the polymerization degree of polyvinyl alcohol of 1700, the content of the hydroxyl group of 30% by mole, the acetylation degree of 1% by mole, the acetalization degree (the butyralization degree) of 69% by mole))

With regard to the polyvinyl butyral resin (PVB), the butyralization degree (the acetalization degree), the acetylation degree and the content of the hydroxyl group were measured by a method in accordance with JIS K6728 "Testing methods for polyvinyl butyral". In this connection, even in the cases of being measured according to ASTM D1396-92, numerical values similar to those obtained by a method in accordance with JIS K6728 "Testing methods for polyvinyl butyral" were exhibited.

### (Plasticizer)

### Triethylene glycol di-2-ethylhexanoate (3GO)

### (Dye)

Anthraquinone-based dye (1) (CASNo.14233-37-5, molar volume of 262 cm³/mol)
Anthraquinone-based dye (2) (CASNo.13676-91-0, molar volume of 303 cm³/mol)
Anthraquinone-based dye (3) (CASNo.17418-58-5, molar volume of 223 cm³/mol)
Anthraquinone-based dye (4) (CASNo2475-44-7, molar volume of 477 cm³/mol)
Aminoketone-based dye (1) (CASNo.20749-68-2, molar volume of 246 cm³/mol)
Anthraquinone-based dye (X) (CASNo.81-42-5, molar volume of 182 cm³/mol)

### (Pigment)

Indole pigment (CASNo.5590-18-1)

### (Light stabilizer)

Tinuvin 765 (available from BASF Japan Ltd., N-C (alkyl group) type)
Tinuvin 770 (available from BASF Japan Ltd., N-H (hydrogen group) type)
Tinuvin 123 (available from BASF Japan Ltd., N-O-R (alkoxy group) type)

### (Metal salt)

Mixture (1) (mixture of magnesium acetate and magnesium 2-ethylhexanoate)

### (Ultraviolet ray screening agent)

Tinuvin 326 (available from BASF Japan Ltd.)

### (Oxidation inhibitor)

BHT (2,6-di-t-butyl-p-cresol)

### (Example 1)

### Preparation of composition for forming resin film:

To PVB (1), 3GO, anthraquinone-based dye (4), anthraquinone-based dye (3), anthraquinone-based dye (2), mixture (1), Tinuvin 326, and BHT were added in the mixing amounts shown in the following Table 1, and kneaded sufficiently with a mixing roll, to obtain a composition.

### Preparation of resin film:

A composition for forming a resin film was extruded with an extruder, and imparted with embossment on the surface of the resin film by using a emboss roll so that the 10-point average roughness Rz measured in accordance with JIS B0601:1994 was 20 µm, and thus a monolayer resin film (780 µm thick) was prepared.

### Preparation of laminated glass:

The obtained resin film was cut out into a piece of 15 cm long × 15 cm wide. Then the resin film was sandwiched between two sheets of clear glass having a thickness of 2 mm in accordance with the JIS R3208 (15 cm long × 15 cm wide × 2 mm thick), and vacuum-pressed by retention at 90°C for 30 minutes with a vacuum laminator, to obtain laminated glass.

### (Examples 2 to 12 and Comparative Examples 1 to 4)

A resin film and laminated glass were obtained in the same manner as that in Example 1 except that the kinds and the amounts of the ingredients of the composition were set to that shown in the following Tables 1 to 3.

### (Evaluation)

### (1) Measurement of glass transition temperature

Each resin film obtained in examples and comparative examples was left to stand at 25°C and a relative humidity of 30% for 12 hours. After leaving to stand for 12 hours, viscoelasticity was measured using ARES-G2 available from TA INSTRUMENTS. As a jig, a parallel plate having a diameter of 8 mm was used. The measurement was performed under the condition in which the temperature is decreased from 100°C to -10°C at a temperature decreasing rate of 3°C/minute and under the condition of a frequency of 1 Hz and a strain of 1%. In the measurement results obtained, the peak temperature of the loss tangent was defined as the glass transition temperature Tg (°C).

### (2) Measurement of haze value

A haze value of obtained laminated glass was measured using a haze meter ("TC-HIIIDPK" available from Tokyo Denshoku Co., Ltd.) in accordance with JIS K6714.

### (3) Total light transmittance

A total light transmittance (TvD) of the obtained laminated glass was measured in accordance with JIS R3106:1998. The spectral transmittance was measured by a spectrophotometer ("U-4100" available from Hitachi High-Technologies Corporation) while the obtained laminated glass was brought into close and parallel contact with an opening of an integrating sphere so that all the transmitted rays are received by the integrating sphere. The visible light transmittance calculated from the obtained spectral transmittance was determined as a total light transmittance.

### (4) Evaluation of discoloration (color staining)

On a rubber sheet (hardness 60, 5 cm long, 5 cm wide, 2 mm thick), each resin film obtained in examples and comparative examples (4 cm long, 4 cm wide) was placed so that a face with less coloring comes into contact with the rubber sheet. Then, a polyvinyl butyral resin film for color staining test (760 µm thick, 4 cm long, 4 cm wide, not containing a dye and a pigment) was prepared. A 10-point average roughness Rz of the surface measured in accordance with JIS B 0601:1994 of the polyvinyl butyral resin film for color staining test is 20 µm. The polyvinyl butyral resin film for color staining test is made up of 100 parts by weight of a polyvinyl butyral resin (polymerization degree of polyvinyl alcohol of 1700, content of hydroxyl group of 30% by mole, acetylation degree of 1% by mole, butyralization degree of 69% by mole) and 40 parts by weight of triethylene glycol di-2-ethylhexanoate (3GO). On each resin film obtained in examples and comparative examples, the polyvinyl butyral resin film for color staining test, and green glass (in accordance with JIS R3208, 2 mm thick, 4 cm long, 4 cm wide) were placed to obtain a laminate. On the glass plate of the obtained laminate, a load of 200 g/cm² was applied uniformly with a pressing machine, and left to stand at 23°C and a humidity of 25% for 1 week. After leaving to stand, the polyvinyl butyral resin film for color staining test was taken out.

Using the polyvinyl butyral resin film for color staining test before standing and the polyvinyl butyral resin film for color staining test after standing, laminated glass was prepared for each film using two sheets of clear glass (2.5 mm thick, 4 cm long, 4 cm wide) having a visible light transmittance of 90% as measured in accordance with JIS R3106:1998. For the obtained laminated glass, change in color tone before and after standing was determined by color difference ΔE in accordance with JIS K 8781-4:2013 using a spectrophotometer ("U-4100" available from Hitachi High-Technologies Corporation). The measurement position was a center part of the laminated glass. Discoloration was judged from color difference ΔE according to the following criteria.

### [Criteria for judgment in discoloration]

○○: ΔE is 4.3 or less
○: ΔE is more than 4.3 and 4.5 or less
Δ: ΔE is more than 4.5 and 7 or less
×: ΔE is more than 7

### (5) Evaluation of color irregularity (difference in color tone between edge part and inside edge part) after irradiation with light

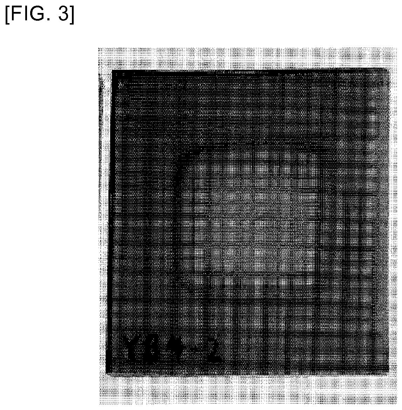

For laminated glass of 15 cm long × 15 cm wide obtained in each of examples and comparative examples, either one face of the laminated glass was selected as a light source side, and the laminated glass was set at a distance of 230 mm from the light source. Further, the laminated glass was set in such a manner that two of four sides of the laminated glass were hidden by a stationary frame so that the remaining two sides were exposed to light. Using "H75" available from Suga Test Instruments Co., Ltd., the black panel temperature was set at 50°C and the irradiation intensity was set at 70 W/m² (wavelength ranging from 300 nm to 400 nm), and irradiation with light was conducted for 1000 hours at a black panel temperature of 50°C. Color irregularity was judged by visual check according to the following criteria. Fig. 3 illustrates laminated glass in which color irregularity occurred.

### [Criteria for judgment in color irregularity after irradiation with light]

○○: The color tone is identical between the edge parts of the two sides exposed to the light, and the region ranging from 5 mm to 25 mm on the inner side of the edge part, and no color irregularity occurs.
○: The color tone differs between the edge parts of the two sides exposed to the light, and the region ranging from 5 mm to 25 mm on the inner side of the edge part, and very weak color irregularity occurs.
Δ: The color tone differs between the edge parts of the two sides exposed to the light, and the region ranging from 5 mm to 25 mm on the inner side of the edge part, and weak color irregularity occurs.
×: The color tone differs between the edge parts of the two sides exposed to the light, and the region ranging from 5 mm to 25 mm on the inner side of the edge part, and strong color irregularity occurs.

### (6) Calculation of molar volume

A molar volume of each dye used in examples and comparative examples was calculated with software HSPiP 4th Edition 4.1.07.

### (7) Identification and quantification of dye and pigment

Regarding a dye, after dissolving a thermoplastic resin film in a solvent, the dye was separated by HPLC, and the separated solvent was removed, and then the dye was identified by NMR, or MALDI-TOF-MS, TOF-SIMS, LC-MS, GC-MS, IR, UV-Vis spectrum measurement and the like. Regarding a pigment, after extraction from a thermoplastic resin film by supercritical extraction with carbon dioxide, or by Soxhlet extraction with an organic solvent, the thermoplastic resin film after extraction was analyzed by pyrolysis GC, MALDI-TOF-MS, TOF-SIMS, LC-MS, GC-MS, TEM-EDS, NMR. Besides the above, the thermoplastic resin film after the Soxhlet extraction was dissolved in a solvent, and after the thermoplastic resin was taken out by a reprecipitation method or the like, a coloring agent obtained by distilling off the solvent used for precipitation was identified by XRD, NMR, MALDI-TOF-MS, TOF-SIMS, LC-MS, GC-MS, IR method, UV-Vis spectrum measurement and the like. When a plurality of pigments were present, they were separated by HPLC, GPC and the like. After identification, as a quantification method, a method of making a calibration curve using a peak area of HPLC, a method of making a calibration curve using a UV-Vis spectrum, and the like were employed.

The details and the results are shown in the following Tables 1 to 3. In the following Tables 1 to 3, the content of the plasticizer indicates the content relative to 100 parts by weight of the polyvinyl acetal resin. In the following Tables 1 to 3, the contents of the dye, the pigment, the light stabilizer, the ultraviolet ray screening agent, and the oxidation inhibitor indicate the contents in 100% by weight of the resin film. In the following Tables 1 to 3, the total content of Mg and K (ppm) indicates the concentration in the resin film.

**[Table 1]**

| | | | Example 1 | Example 2 | Example 3 | Example 4 | Comparative Example 1 | Comparative Example 2 |
|---|---|---|---|---|---|---|---|---|
| | Polyvinyl acetal resin | Kind | PVB(1) | PVB(1) | PVB(1) | PVB(1) | PVB(1) | PVB(1) |
| | | Content (parts by weight) | 100 | 100 | 100 | 100 | 100 | 100 |
| | Plasticizer | Kind | 3GO | 3GO | 3GO | 3GO | 3GO | 3G0 |
| | | Content (parts by weight) | 40 | 40 | 40 | 40 | 40 | 40 |
| | Dye or pigment | Kind 1 | Anthraquinone-based dye (4) | Anthraquinone-based dye (4) | Anthraquinone-based dye (4) | Anthraquinone-based dye (4) | Anthraquinone-based dye (X) | Anthraquinone-based dye (X) |
| | | Molar volume (m³/mol) | 477 | 477 | 477 | 477 | 182 | 182 |
| | | Content (% by weight) | 0.057 | 0.055 | 0.049 | 0.047 | 0.045 | 0.024 |
| | | Kind 2 | Anthraquinone-based dye (3) | Aminoketone-based dye (1) | Anthraquinone-based dye (3) | Aminoketone-based dye (1) | - | Anthraquinone-based dye (1) |
| | | Molar volume (m³/mol) | 287 | 246 | 287 | 246 | - | 262 |
| | | Content (% by weight) | 0.017 | 0.02 | 0.01 | 0.022 | - | 0.029 |
| Resin film | | Kind 3 | Anthraquinone-based dye (2) | Anthraquinone-based dye (2) | Indole pigment | Indole pigment | - | Anthraquinone-based dye (2) |
| | | Molar volume (m³/mol) | 303 | 303 | - | - | - | 303 |
| | | Content (% by weight) | 0.04 | 0.041 | 0.047 | 0.049 | - | 0.042 |
| | | Average molar volume of dye (m³/mol) | 388 | 376 | 445 | 403 | 182 | 260 |
| | Light stabilizer | Kind | - | - | - | - | - | - |
| | | Content (part by weight) | - | - | - | - | - | - |
| | Metal salt | Kind | Mixture (1) | Mixture (1) | Mixture (1) | Mixture (1) | Mixture (1) | Mixture (1) |
| | | Total content of Mg and K (ppm) | 60 | 60 | 60 | 60 | 60 | 60 |
| | Ultraviolet ray screening agent | Kind | TINUVIN326 | TINUVIN326 | TINUVIN326 | TINUVIN326 | TINUVIN326 | TINUVIN326 |
| | | Content (parts by weight) | 0.15 | 0.15 | 0.15 | 0.15 | 0.15 | 0.15 |
| | Oxidation inhibitor | Kind | BHT | BHT | BHT | BHT | BHT | BHT |
| | | Content (parts by weight) | 0.15 | 0.15 | 0.15 | 0.15 | 0.15 | 0.15 |
| Glass transition temperature (°C) | | | 27 | 27 | 27 | 27 | 27 | 27 |
| Total light transmittance (%) | | | 6 | 6 | 56 | 6 | 17 | 6 |
| Haze value (%) | | | 0.3 | 0.3 | 2 | 2.1 | 0.3 | 0.3 |
| Discoloration (color staining) | | ΔE | 2.3 | 4.3 | 2.2 | 3.8 | 7.3 | 11 |
| | | Judgement | ○○ | ○ | ○○ | ○○ | × | × |
| Color irregularity after irradiation with light | | | ○ | ○ | ○○ | ○○ | × | × |

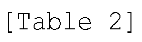

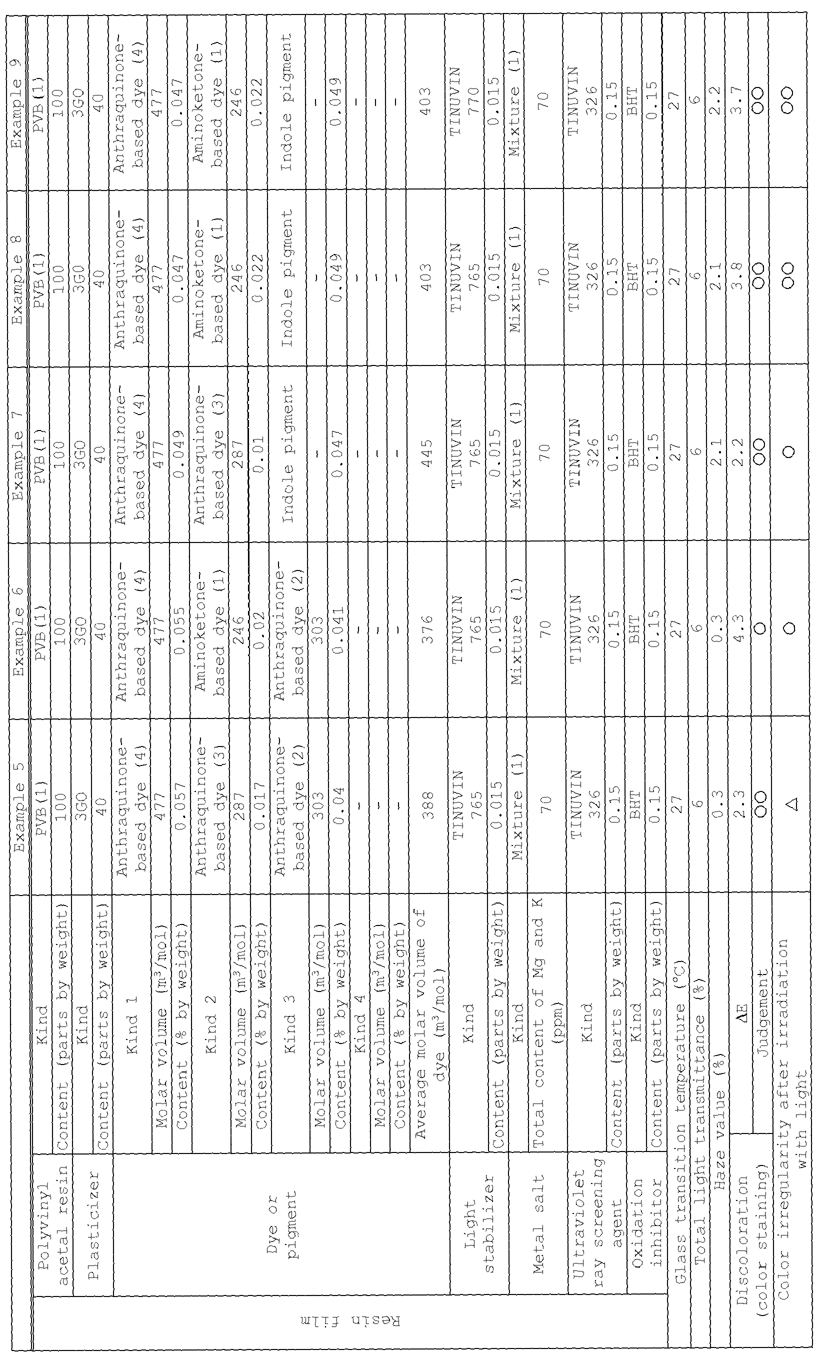

**[Table 3]**

| | | | Example 10 | Example 11 | Example 12 | Comparative Example 3 | Comparative Example 4 |
|---|---|---|---|---|---|---|---|
| | Polyvinyl acetal resin | Kind | PVB(1) | PVB(1) | PVB(1) | PVB(1) | PVB(1) |
| | | Content (parts by weight) | 100 | 100 | 100 | 100 | 100 |
| | Plasticizer | Kind | 3GO | 3GO | 3GO | 3GO | 3GO |
| | | Content (parts by weight) | 40 | 40 | 40 | 40 | 40 |
| | Dye or pigment | Kind 1 | Anthraquinone-based dye (4) | Anthraquinone-based dye (4) | Anthraquinone-based dye (4) | Anthraquinone-based dye (X) | Anthraquinone-based dye (X) |
| | | Molar volume (m³/mol) | 477 | 477 | 477 | 182 | 182 |
| | | Content (% by weight) | 0.047 | 0.047 | 0.047 | 0.045 | 0.024 |
| | | Kind 2 | Aminoketone-based dye (1) | Aminoketone-based dye (1) | Aminoketone-based dye (1) | - | Anthraquinone-based dye (1) |
| | | Molar volume (m³/mol) | 246 | 246 | 246 | - | 262 |
| | | Content (% by weight) | 0.022 | 0.022 | 0.022 | - | 0.029 |
| | | Kind 3 | Indole pigment | Indole pigment | Anthraquinone-based dye (2) | - | Anthraquinone-based dye (2) |
| | | Molar volume (m³/mol) | - | - | 303 | - | 303 |
| Resin | | Content (% by weight) | 0.049 | 0.049 | 0.021 | - | 0.042 |
| film | | Kind 4 | - | - | Indole pigment | - | 303 |
| | | Molar volume (m³/mol) | - | - | - | - | - |
| | | Content (% by weight) | - | - | 0.024 | - | - |
| | | Average molar volume of dye (m³/mol) | 403 | 403 | 403 | 182 | 260 |
| | Light stabilizer | Kind | TINUVIN 123 | TINUVIN 765 | TINUVIN 765 | TINUVIN 765 | TINUVIN 765 |
| | | Content (parts by weight) | 0.015 | 0.1 | 0.1 | 0.015 | 0.015 |
| | Metal salt | Kind | Mixture (1) | Mixture (1) | Mixture (1) | Mixture (1) | Mixture (1) |
| | | Total content of Mg and K (ppm) | 70 | 70 | 70 | 70 | 70 |
| | Ultraviolet ray screening agent | Kind | TINUVIN 326 | TINUVIN 326 | TINUVIN 326 | TINUVIN 326 | TINUVIN 326 |
| | | Content (parts by weight) | 0.15 | 0.15 | 0.15 | 0.15 | 0.15 |
| | Oxidation inhibitor | Kind | BHT | BHT | BHT | BHT | BHT |
| | | Content (parts by weight) | 0.15 | 0.15 | 0.15 | 0.15 | 0.15 |
| Glass transition temperature (°C) | | | 27 | 27 | 27 | 27 | 27 |
| Total light transmittance (%) | | | 6 | 6 | 6 | 17 | 6 |
| Haze value (%) | | | 2.2 | 2.2 | 1.5 | 0.3 | 0.3 |
| Discoloration (color staining) | | ΔE | 3.8 | 3.8 | 3.4 | 7.4 | 11 |
| | | Judgement | ○○ | ○○ | ○○ | × | × |
| Color irregularity after irradiation with light | | | ○○ | ○○ | ○○ | × | × |

### EXPLANATION OF SYMBOLS

- 1:: Glass plate-including laminate (Laminated glass)
- 2:: Resin film
- 2a:: First surface
- 2b:: Second surface
- 11:: Glass plate-including laminate (Laminated glass)
- 12:: Resin film
- 13:: First layer (Resin film)
- 14:: Second layer (Resin film)
- 15:: Third layer (Resin film)
- 13a:: Outer surface
- 15a:: Outer surface
- 21:: First lamination glass member (First glass plate)
- 22:: Second lamination glass member

## Claims

1. A thermoplastic resin film comprising:
a thermoplastic resin; and
a dye,
the thermoplastic resin film having a color difference ΔE of 4.3 or less, determined by measuring change in color tone before and after application of load on a polyvinyl butyral resin film for color staining test in accordance with JIS K8781-4:2013 after applying a load of 200 g/cm² at 23°C and a humidity of 25% for 1 week on a laminate made up of the thermoplastic resin film, the polyvinyl butyral resin film for color staining test, and a green glass in accordance with JIS R3208 having a thickness of 2 mm laminated in this order on a rubber sheet having a hardness of 60.

2. The thermoplastic resin film according to claim 1, wherein the dye includes a dye having a molar volume of 200 cm³/mol or more.

3. The thermoplastic resin film according to claim 1 or 2, further comprising a pigment.

4. The thermoplastic resin film according to any one of claims 1 to 3, wherein the thermoplastic resin is a polyvinyl acetal resin.

5. The thermoplastic resin film according to any one of claims 1 to 4, including an anthraquinone-based dye, an azo-based dye, or an aminoketone-based dye as the dye.

6. The thermoplastic resin film according to any one of claims 1 to 5, further comprising a light stabilizer.

7. The thermoplastic resin film according to claim 6, wherein the light stabilizer is a hindered amine light stabilizer.

8. The thermoplastic resin film according to claim 7, wherein the hindered amine light stabilizer is a hindered amine light stabilizer in which an alkyl group or an alkoxy group is bonded to a nitrogen atom of a piperidine structure.

9. The thermoplastic resin film according to any one of claims 1 to 8, wherein the dye is an ingredient having a largest to a fourth largest content on a basis of weight, among all coloring agents contained in the thermoplastic resin film.

10. The thermoplastic resin film according to any one of claims 1 to 9, wherein when a glass plate-including laminate is obtained by sandwiching a thermoplastic resin film between two sheets of green glass having a thickness of 2 mm in accordance with JIS R3208, the obtained glass plate-including laminate has a haze value of 3% or less.

11. The thermoplastic resin film according to any one of claims 1 to 10, wherein when a glass plate-including laminate is obtained by sandwiching a thermoplastic resin film between two sheets of green glass having a thickness of 2 mm in accordance with JIS R3208, the obtained glass plate-including laminate has a total light transmittance of 50% or less.

12. The thermoplastic resin film according to any one of claims 1 to 11, having a glass transition temperature of 25°C or more and 40°C or less.

13. The thermoplastic resin film according to any one of claims 1 to 12, wherein an average molar volume of all dyes contained in the thermoplastic resin film is 280 cm³/mol or more.

14. The thermoplastic resin film according to any one of claims 1 to 13, including three or more kinds of the dyes, and one or more kinds of pigments.

15. The thermoplastic resin film according to any one of claims 1 to 14, which is to be used while being bonded to a glass plate.

16. A glass plate-including laminate comprising:
a first glass plate; and
the thermoplastic resin film according to any one of claims 1 to 15,
the thermoplastic resin film being bonded to the first glass plate.

17. The glass plate-including laminate according to claim 16, comprising:
the first glass plate as a first lamination glass member;
the thermoplastic resin film; and
a second lamination glass member, wherein
the thermoplastic resin film is bonded to the first glass plate,
the thermoplastic resin film is bonded to the second lamination glass member, and
the thermoplastic resin film is arranged between the first glass plate and the second lamination glass member.
